# EUROPÄISCHE PATENTSCHRIFT

(11) **EP 1 715 268 B1**
(45) Veröffentlichungstag und Bekanntmachung des Hinweises auf die Patenterteilung: **02.09.2009**
(21) Anmeldenummer: 06007163.6
(22) Anmeldetag: 05.04.2006
(51) Int. Cl.: F27B 9/24, F27D 9/00, B65G 13/06, B65G 47/26

(54) **Antriebsvorrichtung für Rollen von Rollenherdöfen und Rollenherdofen**
Driving device for roller kiln rolls and roller kiln
Dispositif d'entraînement pour des rouleaux d'un four à rouleaux et four à rouleaux

(30) Priorität: 20.04.2005 DE 202005006587 U
(43) Veröffentlichungstag der Anmeldung: 25.10.2006
(73) Patentinhaber: Rollmod Hochtemperatur - Transportsysteme GmbH, 71272 Renningen (DE)
(72) Erfinder: Wünning, Joachim A., Dr.-Ing., 71229 Leonberg (DE)
(74) Vertreter: Patentanwälte Ruff, Wilhelm, Beier, Dauster & Partner

(56) Entgegenhaltungen:
- EP-A- 0 342 343
- DE-U1- 20 316 236
- JP-A- 10 025 023
- JP-A- 59 124 607

## Beschreibung

Die Erfindung betrifft eine Antriebsvorrichtung für Rollen von Rollenherdöfen mit einem Lagerbalkenmodul mit einer Montageplatte zur Befestigung an einer Seitenwand des Rollenherdofens, wobei die Montageplatte wenigstens eine Durchgangsöffnung zum Aufnehmen eines Antriebszapfens zum Antreiben einer der Rollen aufweist.

Aus der europäischen Patentschrift EP 03 42 343 B1 ist ein Rollenherdofen zur Wärmebehandlung für Kleinteile aus Metall und Keramik bekannt, bei dem eine Rollentransportbahn aus mehreren, nebeneinander angeordneten Rollen aufgebaut ist. Die Enden dieser Rollen sind mit Lagerzapfen verbunden, die an beiden Enden der Rollen in jeweils einem Lagerbalkenmodul gelagert sind. Beispielsweise sind fünf Rollen beidseitig in jeweils einem Lagerbalkenmodul gelagert. Der Lagerbalken weist antriebsseitig Vorrichtungen zum Aufnehmen von Antriebszapfen der Rollen auf und ist innerhalb einer Seitenwand des Rollenherdofens angeordnet. Die Rollen eines Lagerbalkenmoduls können durch Justierung des Lagerbalkens relativ zur Seitenwand justiert werden. Das Lagerbalkenmodul kann insgesamt aus dem Rollenherdofen ausgebaut werden. Die dort beschriebene Lösung ist insbesondere für Öfen mit einem Rollenabstand von weniger als 50mm besonders vorteilhaft. Die Rollen können allerdings nicht einzeln gewechselt werden.

Aus der Gebrauchsmusterschrift DE 203 16 236 U1 ist ein Antriebskonzept für eine Rollentransportbahn bekannt, bei dem die Rollen mittels jeweils einer Getriebebox an eine Antriebswelle angeschlossen werden. Die Getriebebox umfasst jeweils ein Zahnrad, das mit der jeweiligen Rolle drehfest verbunden ist und mit einer angetriebenen Schneckenwelle kämmt. Die Schneckenwelle ist nicht durchgehend ausgebildet. Jede Schneckenwelle verfügt beidseitig über Einsteckbohrungen, in die Wellenabschnitte eingeführt werden können, in die eine Verbindung zu den benachbarten Getriebeboxen herstellen. Die Wellenabschnitte sind relativ zu den Schneckenwellen so weit verschiebbar, dass die Getriebeboxen einzeln demontiert werden können. Die Gehäuse der Getriebeboxen schützen vor Verschmutzungen und Witterungseinflüssen.

Aus der japanischen Patentzusammenfassung JP 10 025 023 ist eine Drehkupplung bekannt, die ein Verbindungsstück mit einem leistenartigen Vorsprung auf jeder Seite aufweist. Die leistenartigen Vorsprünge sind im rechten Winkel zueinander angeordnet und greifen in passende Nuten in entsprechenden Gegenstücken ein. Das Verbindungsstück ist in eines der Gegenstücke so eingeschoben, dass es lediglich senkrecht zur Achse herausgeschoben werden kann, aber keine Winkelbewegung zur Achse ausführen kann.

Aus der japanischen Patentzusammenfassung JP 59 124 607 ist eine Antriebsvorrichtung für Rollen bekannt, bei der eine Schneckenwelle verwendet wird, mit Rollen drehfest verbundene Zahnräder anzutreiben.

Aufgabe der Erfindung ist es, eine Antriebsvorrichtung für Rollen von Rollenherdöfen bereitzustellen, die einen Ausbau einzelner Rollen in einfacher Weise ermöglicht. Weiterhin soll eine Antriebsvorrichtung bereitgestellt werden, die problemlos gegen Gasverluste des Rollenherdofens abdichtbar ist.

Erfindungsgemäß ist hierzu eine Antriebsvorrichtung für Rollen von Rollenherdöfen mit einem Lagerbalkenmodul mit einer Montageplatte zur Befestigung an einer Seitenwand des Rollenherdofens vorgesehen, wobei die Montageplatte wenigstens eine Durchgangsöffnung zum Aufnehmen eines Antriebszapfens zum Antreiben einer der Rollen aufweist, bei der wenigstens eine an der Montageplatte befestigte Winkelgetriebeeinheit vorgesehen ist, deren Winkeltrieb mittels des Antriebszapfens mit der anzutreibenden Rolle in Verbindung steht und die weiter wenigstens ein erstes und ein zweites Drehkupplungsstück aufweist, die von Außenseiten eines Gehäuses der Winkelgetriebeeinheit zugänglich sind und zum Verbinden des Winkeltriebs mit zwei weiteren Winkelgetriebeeinheiten zum Antreiben jeweils einer benachbarten Rolle vorgesehen sind, wobei das freie Ende der Rolle mittels der Winkelgetriebeeinheit gelagert ist, wobei die Durchgangsöffnung in der Montageplatte einen größeren Durchmesser als die Rolle aufweist und die Winkelgetriebeeinheit mit der Rolle abziehbar ausgebildet ist und wobei die Rolle auf einer der Winkelgetriebeeinheit gegenüberliegenden Seite mit einem Lagerzapfen abziehbar in eine Lagervorrichtung eingesteckt ist.

Durch Vorsehen einer Winkelgetriebeeinheit für jede Rolle, die mittels Kupplungsstücken an benachbarte Winkelgetriebeeinheiten angekoppelt ist, ist es möglich, jede Rolle einzeln auszubauen. Der Ausbau kann dabei in einfacher Weise erfolgen, da nebeneinander angeordnete Winkelgetriebeeinheiten mittels Kupplungen verbunden sind und somit das Winkelgetriebe selbst beim Ausbau der Rolle nicht zerlegt werden muss. Indem eine Winkelgetriebeeinheit vorgesehen ist, deren Winkeltrieb innerhalb eines Gehäuses angeordnet ist, wird beim Ausbau einer Rolle die Ausrichtung der Komponenten des Winkeltriebs zueinander nicht verändert. Dadurch werden Verspannungen im Winkeltrieb durch Montagefehler vermieden.

Indem das freie Ende der Rolle mittels der Winkelgetriebeeinheit gelagert ist, kann auch die kritische Lagerung der Rolle im kühleren Bereich erfolgen. Beispielsweise sind die Winkelgetriebeeinheiten bereits außerhalb der Seitenwand des Rollenherdofens angeordnet und dadurch gegenüber dieser zwangsläufig kühler. Um die Funktionsfähigkeit des Winkelgetriebes sicherzustellen, ist darüber hinaus ohnehin eine zweiseitige Lagerung der darin angeordneten Zahnräder bzw. Schnecken erforderlich. Die Winkelgetriebeeinheit kann dadurch problemlos die Lagerung des freien Endes der Rolle übernehmen und aufgrund der zweiseitigen Lagerung in der Winkelgetriebeeinheit kann die Rolle insgesamt spannungsfrei zwischen ihren Lagerpunkten aufgenommen werden. Dies ist insbesondere bei keramischen Rollen von Vorteil.

Die Durchgangsöffnung in der Montageplatte weist einen größeren Durchmesser als die Rolle auf und die Winkelgetriebeeinheit ist mit der Rolle abziehbar ausgebildet. Auf diese Weise lassen sich einzelne Rollen in besonders einfacher Weise ausbauen, da sie nach Lösen der Winkelgetriebeeinheit von der Montageplatte zusammen mit dieser ab- und aus dem Rollenherdofen herausgezogen werden können. Vorteilhafterweise ist die Rolle dabei auf einer der Winkelgetriebeeinheit gegenüberliegenden Seite mit einem Lagerzapfen abziehbar in eine Lagervorrichtung eingesteckt. Auch auf der der Winkelgetriebeeinheit gegenüberliegenden Seite kann die Lagerung dadurch im kühlen Bereich erfolgen und einzelne Rollen sind in besonders einfacher Weise ausbaubar. Die Lagervorrichtung an der zur Winkelgetriebeeinheit gegenüberliegenden Seite kann dabei ebenfalls an einer Montageplatte befestigt sein, die eine Durchgangsöffnung zum Durchführen des Lagerzapfens der Rolle aufweist, wobei die Lagervorrichtung in einem die Durchgangsöffnung der Montageplatte umgebenden Bereich gegen diese abgedichtet ist. Analog zur Abdichtung auf der Seite der Winkelgetriebeeinheit wird dadurch die Abdichtung des Rollenherdofens in die Lagervorrichtung selbst verlegt. Da der Lagerzapfen der Rolle lediglich in die Lagervorrichtung eingesteckt ist, kann dadurch auf eine Abdichtung drehender Teile vollständig verzichtet werden, es kann aber auch zweckmäßig sein, die Lagerzapfen von einer Außenseite des Rollenherdofens her zugänglich zu machen und dann einen Radialwellendichtring als Abdichtung an der Lagervorrichtung vorzusehen.

In Weiterbildung der Erfindung sind das erste und zweite Drehkupplungsstück zum Ausgleichen eines Winkelversatzes und/oder zum Ausgleichen eines Linearversatzes parallel zur Transportrichtung im Rollenherdofen und senkrecht hierzu ausgebildet.

Kleine Fluchtfehler zwischen den Gehäusen der Winkelgetriebeeinheiten können dadurch problemlos ausgeglichen werden. Zweckmäßigerweise kann das Gehäuse der Winkelgetriebeeinheit zur Justierung der Rolle auf der Montageplatte verschiebbar sein, so dass sich jede einzelne Rolle in ihrer Ausrichtung justieren lässt. Dies kann vor allem bei langen Transportstrecken von großer Bedeutung sein, da die auf der Rollenbahn transportierten Teile in Rollenherdöfen stark erhitzt werden und daher sichergestellt werden muss, dass die stark erhitzten und dadurch empfindlichen Teile an einer Seitenwand des Rollenherdofens anstoßen.

In Weiterbildung der Erfindung sind das erste und das zweite Drehkupplungsstück an gegenüberliegenden Seiten des Gehäuses der Winkelgetriebeeinheit angeordnet. Vorteilhafterweise sind das erste und das zweite Drehkupplungsstück an einer in Transportrichtung durch den Rollenherdofen vorderen Seite bzw. hinteren Seite angeordnet und es ist weiter vorteilhaft, wenn das erste und das zweite Drehkupplungsstück im Wesentlichen parallel zur Transportrichtung durch den Rollenherdofen ausgerichtet sind.

Zum Aus- oder Einbauen einer Winkelgetriebeeinheit in die Antriebsvorrichtung, gegebenenfalls gemeinsam mit der Rolle, müssen somit lediglich die an gegenüberliegenden Seiten des Gehäuses der Winkelgetriebeeinheit angeordneten Kupplungen sowie Befestigungsschrauben des Gehäuses an der Montageplatte gelöst werden. Der Einbau kann in umgekehrter Reihenfolge erfolgen, wobei eine exakte Ausrichtung der Winkelgetriebeeinheit relativ zu den benachbarten Winkelgetriebeeinheiten aufgrund der zwischen diesen vorhandenen Drehkupplungen nicht zwingend erforderlich ist. Bei mehreren nebeneinander angeordneten Winkelgetriebeeinheiten ergibt sich bei dieser Anordnung eine parallel zur Transportrichtung durch den Rollenherdofen durchlaufende Antriebswelle, die zwischen den einzelnen Winkelgetriebeeinheiten jeweils durch Drehkupplungen gebildet ist. Ein Antrieb, beispielsweise ein Elektromotor, kann an geeigneter Stelle an eine der mehreren Winkelgetriebeeinheiten angekoppelt werden, beispielsweise an die erste oder letzte Winkelgetriebeeinheit in einer Reihe.

In Weiterbildung der Erfindung weisen das erste Drehkupplungsstück und das zweite Drehkupplungsstück einen aus dem Gehäuse der Winkelgetriebeeinheit herausragenden Wellenstummel auf, der mittig und senkrecht zur Wellenachse geschlitzt ist. Vorteilhafterweise sind zwei Drehkupplungsstücke benachbarter Winkelgetriebeeinheiten dann mittels eines Kreuzkupplungsstücks verbindbar, das an gegenüberliegenden Seiten zu den Schlitzen in den Drehkupplungsstücken passende Vorsprünge aufweist.

Auf diese Weise können benachbarte Drehkupplungsstücke in besonders einfacher Weise durch Einsetzen eines Drehkupplungsstücks miteinander verbunden werden. Besonders vorteilhaft ist, dass alle Winkelgetriebeeinheiten identisch ausgebildet sein können. Auch bei zahlreichen Rollen, so können in großen Anlagen bis zu vierhundert Transportrollen innerhalb eines Rollenherdofens vorgesehen sein, und können dadurch die Kosten für die Winkelgetriebeeinheiten niedrig gehalten werden. Zweckmäßigerweise sind die Vorsprünge an dem Kreuzkupplungsstück um 90° zueinander versetzt. Dadurch ist es möglich, das Kreuzkupplungsstück ohne weitere Sicherung in die Schlitze der Drehkupplungsstücke der Winkelgetriebeeinheiten einzuschieben und dennoch ist das Kreuzkupplungsstück dann unverlierbar zwischen zwei Drehkupplungsstücken aufgenommen. Trotzdem ist es dann möglich, eine Winkelgetriebeeinheit abzuziehen, da die Schlitze im ersten und zweiten Drehkupplungsstück einer Winkelgefriebeeinheit parallel zueinander ausgerichtet sind.

In Weiterbildung der Erfindung ist der Antriebszapfen zum Antreiben der Rolle mit einem im Gehäuse der Winkelgetriebeeinheit angeordneten Zahnrad verbunden, das mit einer im Gehäuse der Winkelgetriebeeinheit angeordneten Schnecke kämmt, deren Enden mit dem ersten Drehkupplungsstück bzw. mit dem zweiten Drehkupplungsstück verbunden sind.

Das erste und das zweite Drehkupplungsstück fluchten dadurch miteinander und insgesamt ergibt sich ein besonders einfacher und dabei stabiler Aufbau der Winkelgetriebeeinheit mit wenigen Bauteilen. Zweckmäßigerweise sind das erste und das zweite Drehkupplungsstück starr mit der Schnecke verbunden, so dass sich ein kostengünstig herzustellender Aufbau der Winkelgetriebeeinheit ergibt.

In Weiterbildung der Erfindung ist bei einer Antriebsvorrichtung für Rollen von Rollenherdöfen mit einem Lagerbalkenmodul mit einer Montageplatte zur Befestigung an einer Seitenwand des Rollenherdofens vorgesehen, dass die Montageplatte wenigstens eine Durchgangsöffnung zum Aufnehmen eines Antriebszapfens zum Antreiben einer der Rollen aufweist, bei der wenigstens eine an der Montageplatte befestigte Winkelgetriebeeinheit vorgesehen ist, mittels der das zugeordnete freie Ende der Rolle angetrieben ist, wobei ein Gehäuse der Winkeigetriebeeinheit im Wesentlichen gasdicht ausgebildet und in einem die Durchgangsöffnung der Montageplatte umgebenden Bereich gegen diese abgedichtet ist.

Auf diese Weise kann die im Bereich der Rollenlagerung besonders kritische Abdichtung des Rollenherdofens gegen Gasverluste in das Gehäuse der Winkelgetriebeeinheit selbst verlegt werden. Die Abdichtung kann dadurch in einen gegenüber der Atmosphäre im Rollenherdofen deutlich kühleren Bereich verlegt werden, wodurch die Anforderungen an die Dichtungsmaterialien deutlich geringer sein können. Beispielsweise können an den Durchgängen der Wellenstummel für die Drehkupplungsstücke Radialwellendichtringe vorgesehen werden. Der Rollenherdofen ist dennoch hermetisch abgedichtet, da einerseits die Montageplatte dicht an die Seitenwand des Rollenherdofens angebaut ist und auch das Gehäuse der Winkelgetriebeeinheit im gasdicht mit der Montageplatte verbunden ist. Geringe Leckagemengen können möglicherweise in das Gehäuse der Winketgetriebeeinheit eindringen, da dieses jedoch selbst gasdicht ausgebildet ist, kann durch das Gehäuse oder die Durchgänge von Antriebswellen hindurch kein Gasverlust eintreten. Eine nachteilige Beeinflussung des Winkeltriebs im Gehäuse kann beispielsweise dadurch vermieden werden, dass eine Fettfüllung im Gehäuse im Rahmen einer periodischen Wartung regelmäßig ausgetauscht wird.

In Weiterbildung der Erfindung weist ein Lagerbalkenmodul eine Montageplatte und zwischen zwei und zehn, insbesondere sechs, mit der Montageplatte verbundene Winkelgetriebeeinheit auf. Die Montageplatte ist vorteilhafterweise relativ zur Seitenwand des Rollenherdofens justierbar ausgebildet.

Auf diese Weise werden die Vorteile eines modularen Aufbaus erzielt. Alle mit einem Lagerbalkenmodul verbundene Rollen können dadurch insgesamt justiert und beispielsweise auch gemeinsam ausgebaut werden.

In Weiterbildung der Erfindung weist der Antriebszapfen und/oder der Lagerzapfen ein glockenartiges freies Ende zum Aufnehmen eines Endes einer Rolle auf.

Auf diese Weise ist eine besonders einfache und spannungsfreie Ankopplung der Rollen an die Antriebszapfen und die Lagerzapfen möglich. Beispielsweise ist das glockenartige freie Ende als geschlitzte federnde Glocke ausgebildet, so dass die Rollen unter Vorspannung in der Glocke gehalten werden. Gerade für keramische Rollen ist diese Art der Ankopplung, die spannungsfrei erfolgen kann, von besonderem Vorteil. Zu einer spannungsfreien Ankopplung der Rollen trägt auch die Doppellagerung durch zwei voneinander beabstandete Lager des Antriebszapfens und des Lagerzapfens in der Winkelgetriebeeinheit bzw. in der Lagervorrichtung bei.

Erfindungsgemäß ist auch ein Rollenherdofen mit einer erfindungsgemäßen Antriebsvorrichtung vorgesehen, bei dem an zwei gegenüberliegenden Seitenwänden des Rollenherdofens jeweils zwei parallel zur Transportrichtung im Rollenherdofen und voneinander beabstandet verlaufende Kühlluftkanäle vorgesehen sind, wobei die Montageplatte einen Spalt zwischen zwei Kühlluftkanälen überbrückend an diesen befestigt ist.

Die Kühlluftkanäle können dadurch in einem tragenden Bauteil vorgesehen sein und sie sorgen für eine weitere Absenkung der Temperaturen, der die Winkelgetriebeeinheiten ausgesetzt sind.

Weitere Merkmale und Vorteile der Erfindung ergeben sich aus den beigefügten Ansprüchen und der Beschreibung einer bevorzugten Ausführungsform der Erfindung im Zusammenhang mit den beigefügten Zeichnungen. In den Zeichnungen zeigen:
- Fig. 1: eine perspektivische abschnittsweise Darstellung einer erfindungsgemäßen Antriebsvorrichtung,
- Fig. 2: eine perspektivische abschnittsweise Darstellung eines Lagerbalkenmoduls der Antriebsvorrichtung der Fig. 1,
- Fig. 3: eine perspektivische Darstellung eines Kreuzkupplungsstücks der Antriebsvorrichtung der Fig. 1,
- Fig. 4: eine Seitenansicht der Antriebsvorrichtung der Fig. 1,
- Fig. 5: eine Seitenansicht der Antriebsvorrichtung der Fig. 1 von der in Fig. 1 verdeckten, hinteren Seite her,
- Fig. 6: eine abschnittsweise Schnittansicht der Antriebsvorrichtung der Fig. 6, wobei ein Schnitt senkrecht zur Transportrichtung der Antriebsvorrichtung der Fig. 1 liegt,
- Fig. 7: eine vergrößerte Einzelheit der Schnittansicht der Fig. 6 und
- Fig. 8: eine weitere vergrößerte Einzelheit der Schnittansicht der Fig. 6.

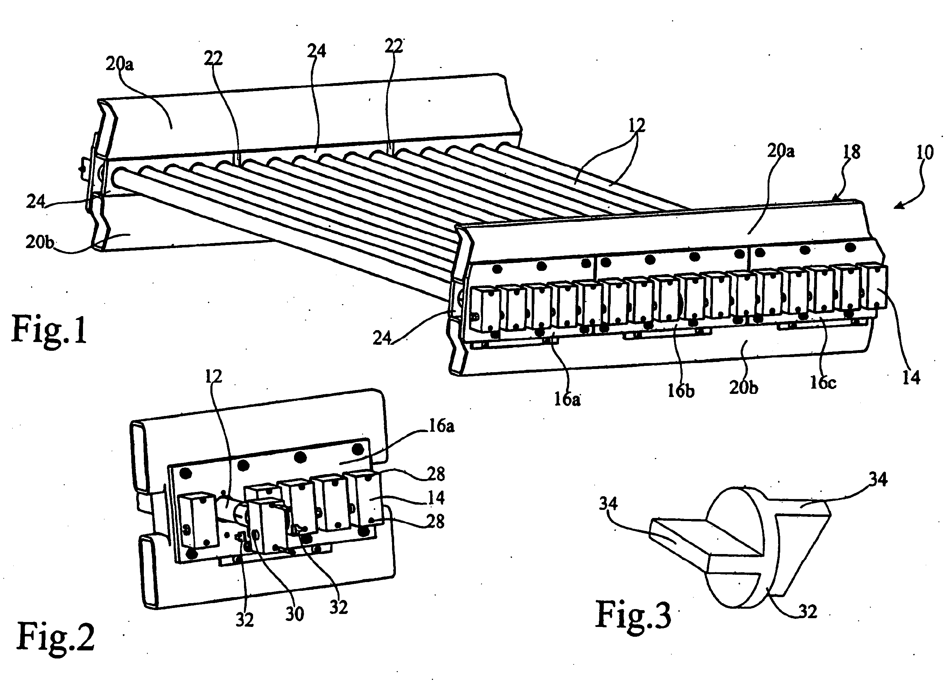

Die abschnittsweise perspektivische Ansicht der Fig. 1 zeigt eine erfindungsgemäße Antriebsvorrichtung 10 in einem - nicht dargestellten - Rollenherdofen. Die Antriebsvorrichtung 10 ist für Rollen 12 vorgesehen, die parallel zueinander angeordnet sind und eine Transportbahn durch den Rollenherdofen hindurch bilden. Jeder der Rollen 12 ist eine Winkelgetriebeeinheit 14 zugeordnet, die mit einer Montageplatte 16a, 16b, 16c verbunden sind. Auf einer Montageplatte 16a, 16b, 16c sind dabei jeweils sechs Winkelgetriebeeinheiten 14 angeordnet. Alle auf einer Montageplatte 16a, 16b, 16c angeordneten Winkelgetriebeeinheiten 14 bilden zusammen mit der Montageplatte 16a, 16b, 16c ein sogenanntes Lagerbalkenmodul.

Die Montageplatten 16a, 16b, 16c sind jeweils mit einem Doppelträger 18 verbunden, der Teil einer Seitenwand des Rollenherdofens bildet und der zwei parallel zueinander ausgerichtete und parallel zur Transportrichtung durch den Rollenherdofen verlaufende Rechteckrohre 20a, 20b aufweist. Die Rechteckrohre 20a, 20b sind voneinander beabstandet und durch Verbindungsstege 22 miteinander verbunden. Die Verbindungsstege 22 sind dabei in Transportrichtung des Rollenherdofens gesehen in gleichbleibenden Abständen zueinander angeordnet und bei dem dargestellten Ausführungsbeispiel so angeordnet, dass jeweils sechs Rollen zwischen zwei Verbindungsstegen 22 angeordnet werden können. Zwischen zwei Verbindungsstegen 22 sind weiterhin Blenden 24 vorgesehen, die ebenfalls die beiden Rechteckrohre 20a, 20b miteinander verbinden und die jeweils sechs Durchgangsöffnungen zum Durchführen der Rollen 12 aufweisen. Die Rechteckrohre 20a, 20b sind zum Durchführen von Kühlluft vorgesehen.

Die Montageplatten 16a, 16b, 16c sind jeweils justierbar an dem Träger 18 angeordnet. Dadurch können alle sechs Rollen eines Lagerbalkenmoduls gemeinsam ausgerichtet und justiert werden.

Alle in Fig. 1 dargestellten Winkelgetriebeeinheiten 14 stehen untereinander mittels Drehkupplungen in Verbindung, so dass alle Rollen 12 sich lediglich gemeinsam drehen können.

Anhand der Darstellung der Fig. 2 ist zu erkennen, wie die Winkelgetriebeeinheiten 14 untereinander verbunden sind. Jede Winkelgetriebeeinheit 14 weist ein Gehäuse auf, das mittels zweier Befestigungsschrauben 28 mit der Montageplatte 16a verbunden ist. Aus dem Gehäuse jeder Winkelgetriebeeinheit 14 ragt an gegenüberliegenden Seiten jeweils ein Wellenstummel 30 heraus, der jeweils mit einem senkrecht zur Wellenachse sich durch die Welle hindurch erstreckenden Schlitz versehen ist. Das Gehäuse der Winkelgetriebeeinheiten 14 ist dabei quaderförmig und die gegenüberliegenden Seiten, aus denen jeweils ein Wellenstummel 30 herausragt, liegen parallel zueinander und senkrecht zu einer Transportrichtung durch den Rollenherdofen. In die Wellenstummel 30 kann ein Kreuzkupplungsstück 32 eingesetzt werden, das den Wellenstummel 30 einer ersten Winkelgetriebeeinheit 14 mit, dem gegenüberliegenden Wellenstummel 30 der benachbarten Winkelgetriebeeinheit 14 verbindet. Die Schlitze in den Wellenstummeln 30 einer jeweiligen Winkelgetriebeeinheit 14 sind dabei parallel zueinander ausgerichtet.

Um eine Winkelgetriebeeinheit 14, so wie in Fig. 2 dargestellt, einschließlich einer zugeordneten Rolle 12 abzuziehen, müssen die Schlitze in den Wellenstummeln 30 daher entweder parallel zur Montageplatte 16a ausgerichtet sein, wie in Fig. 2 dargestellt ist, so dass mittels der Kreuzkupplungsstücke 32 dann die Schlitze in den Wellenstummeln 30 der beiden benachbarten Winkelgetriebeeinheiten 14 senkrecht zur Montageplatte 16a verlaufen. Die Winkelgetriebeeinheit 14 kann dann, wie in Fig. 2 dargestellt ist, gemeinsam mit den beiden Kreuzkupplungsstücken 32 abgezogen werden.

Alternativ können die Schlitze in den Wellenstummeln 30 der abzuziehenden Winkelgetriebeeinheit 14 senkrecht zur Montageplatte 16a ausgerichtet sein, so dass die Winkelgetriebeeinheit 14 dann ohne die beiden Kreuzkupplungsstücke 32 abgezogen werden kann, die dann jeweils in den Wellenstummeln 30 der benachbarten Winkelgetriebeeinheiten 14 verbleiben.

Eine vergrößerte Darstellung eines Kreuzkupplungsstücks 32 ist in Fig. 3 zu erkennen. Das Kreuzkupplungsstück 32 weist zwei an gegenüberliegenden Seiten vorgesehene Vorsprünge 34 auf, die leistenartig ausgebildet und senkrecht zueinander ausgerichtet sind. Die leistenartigen Vorsprünge 34 sind passend zu den Schlitzen in den Wellenstummeln 30 der Winkelgetriebeeinheiten 14 ausgebildet. Wie anhand der Fig. 2 zu erkennen ist, können die Vorsprünge 34 spielbehaftet in den Schlitzen der Wellenstummeln 30 angeordnet sein und dennoch ist nicht zu befürchten, dass die Kreuzkupplungsstücke 32 im montierten Zustand herausfallen, da die beiden Vorsprünge 34 senkrecht zueinander orientiert sind.

Die Wellenstummel 30 bilden Drehkupplungsstücke und zwei benachbarte Wellenstummel 30 bilden zusammen mit einem Kreuzkupplungsstück 32 eine Drehkupplung. Diese Drehkupplung ist dabei so ausgebildet, dass sie einen Winkelversatz und/oder einen Linearversatz zwischen zwei benachbarten Winkelgetriebeeinheiten 14 ausgleichen kann. Ein solcher Versatz kann sich beispielsweise durch Toleranzen der Montageplatte 16a ergeben.

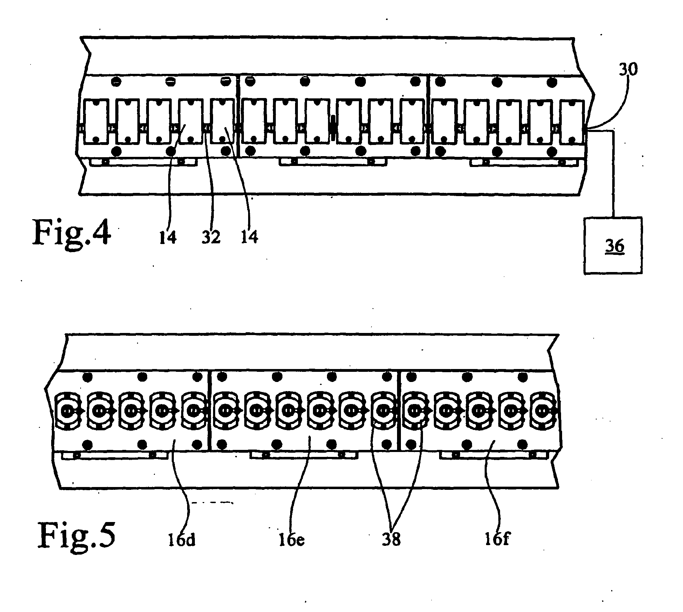

In der Seitenansicht der Fig. 4 ist die Verbindung benachbarter Winkelgetriebeeinheiten 14 mittels jeweils eines Kreuzkupplungsstücks 32 gut zu erkennen. Alle Winkelgetriebeeinheiten 14 sind somit miteinander verbunden und es wird der Effekt einer durchgehenden Antriebswelle erzeugt, ohne die Nachteile einer durchgehenden und starren Antriebswelle in Kauf nehmen zu müssen. Wie bereits ausgeführt wurde kann mittels der Kupplung zwischen benachbarten Winkelgetriebeeinheiten 14, jeweils bestehend aus Drehkupplungsstücken zweier benachbarter Winkelgetriebeeinheiten 14, entsprechend jeweils einem geschlitzten Wellenstummel 30, sowie einem Kreuzkupplungsstück 32, ein Versatz zwischen benachbarten Winkelgetriebeeinheiten 14 ausgeglichen werden.

Schematisch ist in Fig. 4 weiterhin ein Antriebsmotor 36 eingezeichnet, der beispielsweise mit dem Wellenstummel 30 einer ersten Winkelgetriebeeinheit 14 verbunden ist.

Die Seitenansicht der Fig. 5 zeigt die Anordnung der Fig. 1 von der in Fig. 1 hinteren und demnach dort verdeckten Seite. Das freie Ende jeder Rolle ist dort in jeweils einer Lagervorrichtung 38 gelagert, wobei die Lagervorrichtungen 38 auf Montageplatten 16d, 16e, 16f befestigt sind, die wiederum an einen Doppelträger mit Rechteckrohren 20a, 20b befestigt sind. Der Doppelträger ist identisch zum Doppelträger auf der gegenüberliegenden Antriebsseite aufgebaut.

Die Montageplatten 16d, 16e, 16f sind relativ zu dem Doppelträger justierbar, so dass auch alle Rollen eines Lagerbalkenmoduls gemeinsam justiert werden können. Gegebenenfalls kann jede Lagervorrichtung 38 wie jede Winkeleinheit 14 relativ zu der zugeordneten Montageplatte 16d, 16e, 16f verschiebbar sein, so dass jede Rolle relativ zu benachbarten Rollen justiert werden könnte.

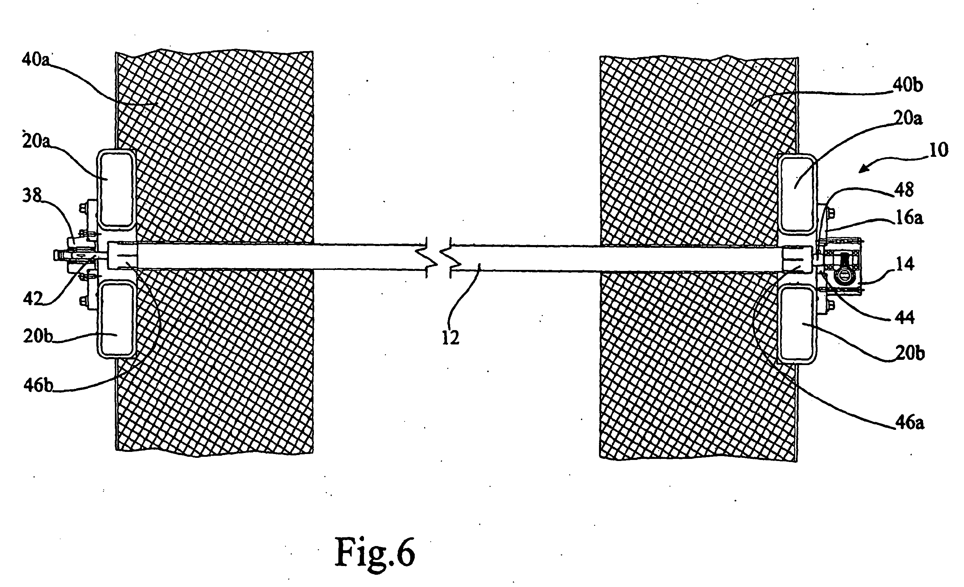

Die teilweise Schnittansicht der Fig. 6 zeigt einen Schnitt durch einen erfindungsgemäßen Rollenherdofen mit der Antriebsvorrichtung 10 der Fig. 1.

Gut zu erkennen sind zunächst die Doppelträger in jeder Seitenwand 40a, 40b des Rollenherdofens mit jeweils zwei Rechteckrohren 20a, 20b. Die Rechteckrohre 20a, 20b sind dabei etwa bis zur Hälfte in eine jeweilige Seitenwand 40a, 40b eingelassen. Wie bereits ausgeführt wurde, sind die Rechteckrohre 20a, 20b kühlluftdurchströmt, so dass ihre Temperatur, jedenfalls auf einer den Seitenwänden 40a, 40b jeweils abgewandten Außenseite, deutlich geringer ist als eine Temperatur der Seitenwände 40a, 40b selbst.

In der Darstellung der Fig. 6 ist weiter gut zu erkennen, dass die Rolle 12 in die Lagervorrichtung 38 mittels eines Lagerzapfens 42 eingesteckt ist. Zum Ausbau einer Rolle 12 muss somit lediglich die zugeordnete Winkelgetriebeeinheit 14 von der zugeordneten Montageplatte 16a gelöst werden und dann kann die Winkelgetriebeeinheit 14 gemeinsam mit der Rolle 12 aus dem Rollenherdofen herausgezogen werden, da der Lagerzapfen 42 lediglich in die Lagervorrichtung 38 eingesteckt ist und eine Durchgangsöffnung 44 in der Montageplatte 16a einen geringfügig größeren Durchmesser aufweist als ein Außendurchmesser der Rolle 12 bzw. ein Außendurchmesser der Rollenhalterungen.

Die Halterungen für die Rolle 12 sind an beiden freien Enden der Rolle 12 in Form einer Halteglocke 46a, 46b ausgebildet. Die Halteglocken 46a, 46b weisen mehrere, parallel zur Einschubrichtung der Rolle 12 ausgerichtete Schlitze auf, so dass bei entsprechender Materialwahl ein Ende der Rolle 12 durch Federwirkung in den Halteglocken 46 gehalten werden kann. Die antriebsseitige Halteglocke 46a ist mit einem nicht sichtbaren Antriebszapfen 48 verbunden, der mittels einer starren Kupplung mit der Winkelgetriebeeinheit 14 verbunden ist. Die gegenüberliegende Halteglocke 46b ist mit dem Lagerzapfen 42 verbunden. Der Lagerzapfen 42 ist, wie in Fig. 6 zu erkennen ist, mittels einer Doppellagerung in der Lagervorrichtung 38 gehalten. Auch der Antriebszapfen 48 ist starr an eine Antriebswelle in der Winkelgetriebeeinheit 14 angebunden, die ebenfalls mittels zweier beabstandeter Lager im Sinne einer Doppellagerung gelagert ist. Bei präziser Ausrichtung der Lagervorrichtung 38 und der Winkelgetriebeeinheit 14 kann die Rolle 12 somit spannungsfrei in den Halteglocken 46a, 46b aufgenommen werden. Dies ist insbesondere bei keramischen Rollen 12 von großem Vorteil.

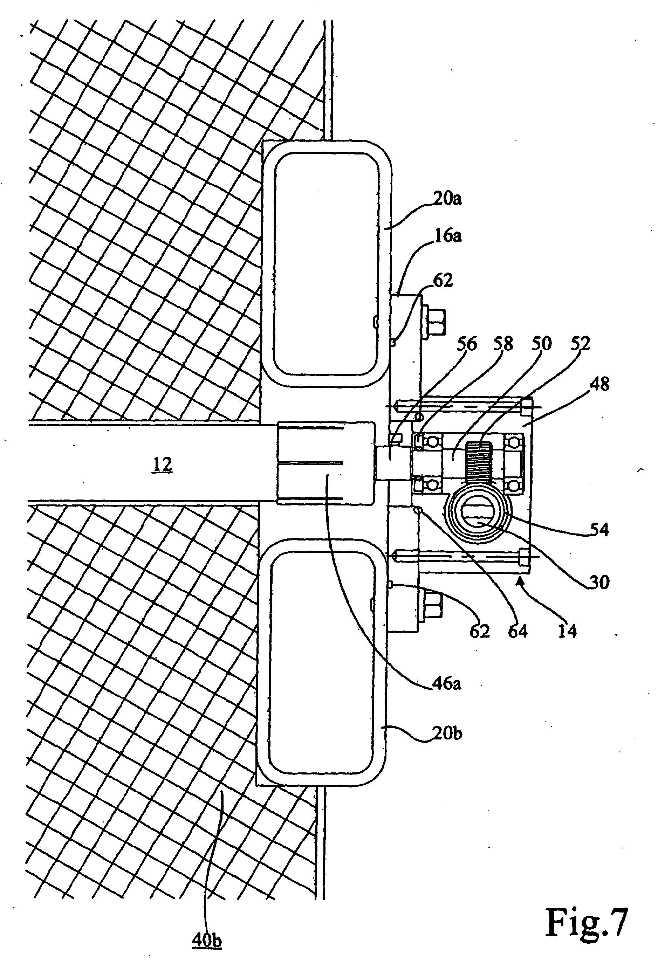

In der Detailansicht der Fig. 7 ist der Aufbau der Winkelgetriebeeinheit 14 genauer zu erkennen. In einem Gehäuse 48 der Winkelgetriebeeinheit 14 ist auf einer Antriebswelle 50 ein Zahnrad 52 drehfest angeordnet, das mit einer ebenfalls im Gehäuse 48 gelagerten Schnecke 54 kämmt. An beiden gegenüberliegenden Enden der Schnecke 54 ist jeweils ein aus dem Gehäuse 48 herausragender Wellenstummel 30 angeordnet, der, wie bereits erwähnt wurde, mit einem senkrecht zur Wellenachse verlaufenden Schlitz versehen ist. Die Antriebswelle 50 ist mittels zweier Kugellager rechts und links des Zahnrades 52 im Gehäuse 48 gelagert. Der Antriebszapfen der Halteglocke 46a zur Halterung der Rolle 12 ist mittels einer starren Kupplung in Form einer Klemmhülse 56 mit der Antriebswelle 50 verbunden. Am Austritt der Antriebswelle 50 aus dem Gehäuse 48 der Winkelgetriebeeinheit 14 ist ein Radialwellendichtring 58 vorgesehen. Dieser Radialwellendichtring 58 sorgt für einen Abdichtung der Antriebswelle 50 gegen den Innenraum des Rollenherdofens. Der Radialwellendichtring 58 muss dabei keine hundertprozentige Abdichtung bewirken, da auch die Durchtrittsstellen der Wellenstummel 30 durch die Seitenwände des Gehäuses 48 mittels geeigneter Radialwellendichtringe abgedichtet ist. Eine endgültige und im Wesentlichen gasdichte Abdichtung des Gehäuses 48 der Winkelgetriebeeinheit 14 erfolgt damit erst außerhalb des Rollenherdofens und somit in einem Bereich, der gegenüber dem Inneren des Rollenherdofens und auch gegenüber dessen Seitenwand 40b, deutlich kühler ist.

Um einen Gasaustritt an anderer Stelle zu vermeiden ist die Montageplatte 16a mittels einer umlaufenden Dichtung 62 gegen den Doppelträger und speziell die Rechteckrohre 20a, 20b abgedichtet. Die umlaufende Dichtung 62 dichtet weiterhin die Montageplatte 16a gegen die in Fig. 1 zu erkennenden Verbindungsstege 22 ab. Das Gehäuse 48 der Winkelgetriebeeinheit 14 ist wiederum mittels eines Dichtrings 64 gegen die Montageplatte 16a abgedichtet. Ein Gasaustritt aus dem Inneren des Rollenherdofens ist somit lediglich durch den Radialwellendichtring 58 in das Innere des Gehäuses 48 der Winkelgetriebeeinheit 14 möglich. Falls die Atmosphäre des Rollenherdofens aggressive Gase enthält, kann eventuellen schädlichen Einflüssen auf den Winkeltrieb der Winkelgetriebeeinheit 14 dadurch vorgebeugt werden, dass eine Fettfüllung im Gehäuse 48 in regelmäßigen Wartungsintervallen ausgetauscht wird. Durch die erfindungsgemäße Abdichtung des Gehäuses 48 der Winkelgetriebeeinheit 14 gegen den Rollenherdofen und die Verlegung der endgültigen Abdichtung des Winkeitriebs in einem kühlen, außerhalb des Rollenherdofens liegenden Bereich, kann eine im Wesentlichen gasdichte Ausführung des Winkeltriebs erreicht werden, ohne dass extrem hohe Anforderungen an die Abdichtung in Bezug auf Temperaturfestigkeit gestellt werden müssten.

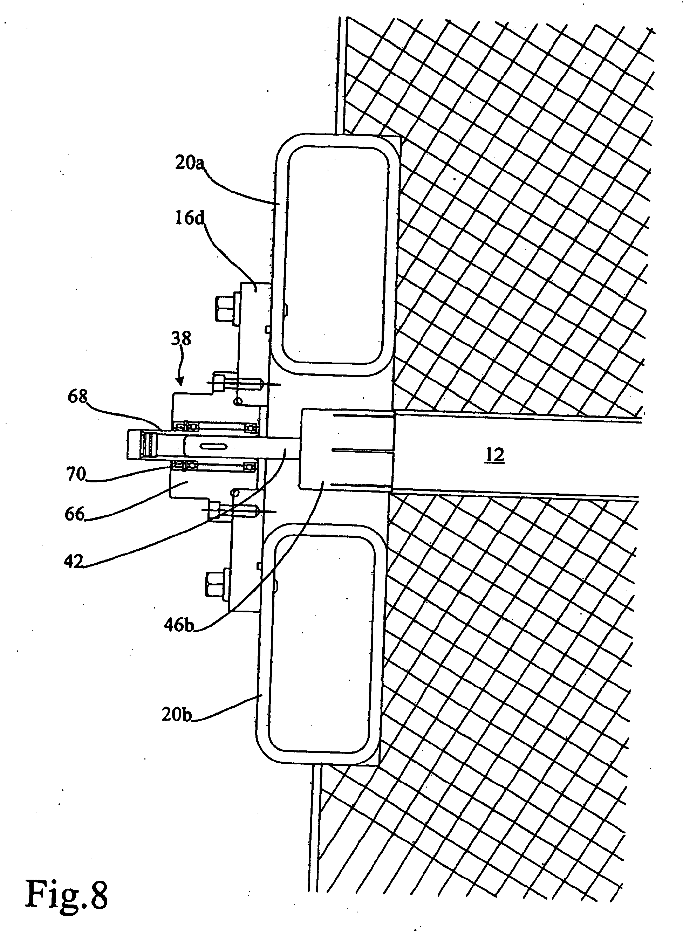

Die Darstellung der Fig. 8 zeigt detailliert die Lagervorrichtung 38 der Fig. 6. Auch hier ist zu erkennen, dass analog zur Antriebsseite, ein Gehäuse 66 der Lagervorrichtung 38 dicht auf die Montageplatte 16d aufgesetzt ist, die wiederum mittels einer umlaufenden Dichtung am Doppelträger mit den Rechtrohren 20a, 20b befestigt ist. Der Lagerzapfen 42 mit der Halteglocke 46b für die Rolle 12 ist in eine Lagerhülse 68 eingesteckt, die wiederum mittels zweier Kugellager im Gehäuse 66 drehbar gelagert ist. Ein Ende der Lagerhülse 68 ragt über das Gehäuse 66 der Lagervorrichtung 38 hinaus und der Durchtritt der Lagerhülse 68 durch die Außenwand des Gehäuses 66 ist mittels eines Radialwellendichtrings 70 abgedichtet. Auch auf der Lagerseite ist somit eine Abdichtung des Innenraums des Rollenherdofens in einen kühleren, außerhalb der Seitenwand 60 des Rollenherdofens liegenden Bereich verlagert.

## Patentansprüche

1. Antriebsvorrichtung für Rollen von Rollenherdöfen, mit einem Lagerbalkenmodul mit einer Montageplatte (16a, 16b, 16c, 16d, 16e, 16f) zur Befestigung an einer Seitenwand (40a, 40b) des Rollenherdofens, wobei die Montageplatte (16a, 16b, 16c, 16d, 16e, 16f) wenigstens eine Durchgangsöffnung (44) zum Aufnehmen eines Antriebszapfens zum Antreiben einer der Rollen (12) aufweist, **dadurch gekennzeichnet, dass** wenigstens eine an der Montageplatte (16a, 16b, 16c, 16d, 16e, 16f) befestigte Winkelgetriebeeinheit (14) vorgesehen ist, deren Winkeltrieb mittels des Antriebszapfens mit der anzutreibenden Rolle (12) in Verbindung steht und die weiter wenigstens ein erstes und ein zweites Drehkupplungsstück (30) aufweist, die von Außenseiten eines Gehäuses (48) der Winkelgetriebeeinheit (14) zugänglich sind und die zum Verbinden des Winkeltriebs mit zwei weiteren Winkelgetriebeeinheiten (14) zum Antreiben jeweils einer benachbarten Rolle (12) vorgesehen sind, wobei das freie Ende der Rolle (12) mittels der Winkelgetriebeeinheit (14) gelagert ist, wobei die Durchgangsöffnung (44) in der Montageplatte (16a, 16b, 16c, 16d, 16e, 16f) einen größeren Durchmesser als die Rolle (12) aufweist und die Winkelgetriebeeinheit (14) mit der Rolle (12) abziehbar ausgebildet ist und wobei die Rolle (12) auf einer der Winkelgetriebeeinheit (14) gegenüberliegenden Seite mit einem Lagerzapfen (42) abziehbar in eine Lagervorrichtung (38) eingesteckt ist.

2. Antriebsvorrichtung nach Anspruch 1, **dadurch gekennzeichnet, dass** das erste und zweite Drehkupplungsstück (30) zum Ausgleichen eines Winkelversatzes und/oder zum Ausgleichen eines Linearversatzes parallel zur Transportrichtung im Rollenherdofen und senkrecht hierzu ausgebildet sind.

3. Antriebsvorrichtung nach Anspruch 1 oder 2, **dadurch gekennzeichnet, dass** das erste und das zweite Drehkupplungsstück (30) an gegenüberliegenden Seiten des Gehäuses der Winkelgetriebeeinheit (14) angeordnet sind.

4. Antriebsvorrichtung nach wenigstens einem der vorstehenden Ansprüche, **dadurch gekennzeichnet, dass** das erste Drehkupplungsstück und das zweite Drehkupplungsstück einen aus dem Gehäuse der Winkelgetriebeeinheit herausragenden Wellenstummel (30) aufweisen, der mittig und senkrecht zur Wellenachse geschlitzt ist.

5. Antriebsvorrichtung nach Anspruch 4, **dadurch gekennzeichnet, dass** zwei Drehkupplungsstücke benachbarter Winkelgetriebeeinheiten mittels eines Kreuzkupplungsstücks (32) verbindbar sind, das an gegenüberliegenden Seiten zu den Schlitzen in den Drehkupplungsstücken passende Vorsprünge (34) aufweist.

6. Antriebsvorrichtung nach einem der vorstehenden Ansprüche, **dadurch gekennzeichnet, dass** der Antriebszapfen zum Antreiben der Rolle (12) mit einem im Gehäuse (48) der Winkelgetriebeeinheit (14) angeordneten Zahnrad (52) verbunden ist, das mit einer im Gehäuse (48) der Winkeligetriebeeinheit (14) angeordneten Schnecke (54) kämmt, deren Enden mit dem ersten Drehkupplungsstück (30) beziehungsweise mit dem zweiten Drehkupplungsstück (30) verbunden sind.

7. Antriebsvorrichtung nach wenigstens einem der vorstehenden Ansprüche, **dadurch gekennzeichnet, dass** ein Gehäuse (48) der Winkelgetriebeeinheit (14) im Wesentlichen gasdicht ausgebildet und in einem die Durchgangsöffnung (44) der Montageplatte (16a, 16b, 16c, 16d, 16e, 16f) umgebenden Bereich gegen diese abgedichtet ist.

8. Antriebsvorrichtung nach wenigstens einem der vorstehenden Ansprüche, **dadurch gekennzeichnet, dass** ein Lagerbalkenmodul eine Montageplatte (16a, 16b, 16c, 16d, 16e, 16f) und zwischen zwei und zehn, insbesondere sechs, mit der Montageplatte (16a, 16b, 16c, 16d, 16e, 16f) verbundene Winkelgetriebeeinheiten (14) aufweist.

9. Antriebsvorrichtung nach Anspruch 8, **dadurch gekennzeichnet, dass** die Montageplatte (16a, 16b, 16c, 16d, 16e, 16f) relativ zur Seitenwand (40a, 40b) des Rollenherdofens justierbar ausgebildet ist.

10. Antriebsvorrichtung nach wenigstens einem der vorstehenden Ansprüche, **dadurch gekennzeichnet, dass** der Antriebszapfen und/oder der Lagerzapfen (42) ein glockenartiges freies Ende (46a, 46b) zum Aufnehmen eines Endes einer Rolle (12) aufweist.

11. Rollenherdofen mit einer Antriebsvorrichtung für Rollen nach wenigstens einem der vorstehenden Ansprüche, **dadurch gekennzeichnet, dass** an zwei gegenüberliegenden Seitenwänden (40a, 40b) des Rollenherdofens jeweils zwei parallel zur Transportrichtung im Rollenherdofen und voneinander beabstandet verlaufende Kühlluftkanäle vorgesehen sind, wobei die Montageplatte (16a, 16b, 16c, 16d, 16e, 16f) einen Spalt zwischen zwei Kühltuftkanälen überbrückend an diesen befestigt ist.

## Claims

1. Driving device for roller kiln rolls having a bearing beam module with a mounting plate (16a, 16b, 16c, 16d, 16e, 16f) for fastening to a side wall (40a, 40 b) of the roller kiln, the mounting plate (16a, 16b, 16c, 16d, 16e, 16f) having at least one through-type opening (44) for receiving a drive pin to drive one of the rolls (12), **characterized in that** at least one angular gear unit (14) mounted on the mounting plate (16a, 16b, 16c, 16d, 16e, 16f) is provided whose angular drive is connected by means of the drive pin to the roll (12) to be driven and that furthermore has a first and a second rotary coupling piece (30) accessible from outer sides of a housing (48) of the angular gear unit (14) and provided for connection of the angular drive to two further angular gear units (14) each for driving an adjacent roll (12), the free end of the roll (12) being supported by the angular gear unit (14), the through-type opening (44) in the mounting plate (16a, 16b, 16c, 16d, 16e, 16f) having a greater diameter than the roll (12) and the angular gear unit (14) with the roll (12) being designed detachable and the roll (12) being detachably inserted with a bearing pin (42) into a bearing device (38) on a side opposite the angular gear unit (14).

2. Driving device according to Claim 1, wherein the first and second rotary coupling pieces (30) are designed in order to compensate for an angular offset and/or to compensate for a linear offset parallel to the transport direction in the roller kiln and vertical thereto.

3. Driving device according to Claim 1 or 2, wherein the first and the second rotary coupling pieces (30) are arranged on opposite sides of the housing of the angular gear unit (14).

4. Driving device according to at least one of the preceding claims, wherein the first rotary coupling section and the second rotary coupling section have a stub shaft (30) projecting from the housing of the angular gear unit and slotted centrally and vertically relative to the shaft axis.

5. Driving device according to Claim 4, wherein two rotary coupling pieces of adjacent angular gear units are connectable by means of a cross-coupling section (32) that has projections (34) on opposite sides matching the slots in the rotary coupling sections.

6. Driving device according to one of the preceding claims, wherein the drive pin for driving the roll (12) is connected to a gear wheel (52) arranged in the housing (48) of the angular gear unit (14) and meshing with a worm (54) arranged in the housing (48) of the angular gear unit (14), the ends of said worm being connected to the first rotary coupling section (30) or to the second rotary coupling section (30).

7. Driving device according to at least one of the preceding claims, wherein a housing (48) of the angular gear unit (14) is designed substantially gas-tight and in an area surrounding the through-type opening (44) of the mounting plate (16a, 16b, 16c, 16d, 16e, 16f) is sealed off from said mounting plate.

8. Driving device according to at least one of the preceding claims, wherein a bearing beam module has a mounting plate (16a, 16b, 16c, 16d, 16e, 16f) and between two and ten, in particular six, angular gear units (14) connected to the mounting plate (16a, 16b, 16c, 16d, 16e, 16f).

9. Driving device according to Claim 8, wherein the mounting plate (16a, 16b, 16c, 16d, 16e, 16f) is designed adjustable relative to the side wall (40a, 40b) of the roller kiln.

10. Driving device according to at least one of the preceding claims, wherein the drive pin and or the bearing pin (42) has a bell-like free end (46a, 46b) for receiving one end of a roll (12).

11. Roller kiln with a driving device for rolls according to at least one of the preceding claims, wherein two cooling air ducts each are provided on two opposite side walls (40a, 40b) of the roller kiln parallel to the transport direction inside the roller kiln and at a distance from one another, the mounting plate (16a, 16b, 16c, 16d, 16e, 16f) being connected thereto in a manner bridging a gap between two cooling air ducts.

## Revendications

1. Dispositif d'entraînement pour rouleaux de fours à rouleaux, avec un rampe de paliers avec une plaque de montage (16a, 16b, 16c, 16d, 16e, 16f) pour fixation à une paroi latérale (40a, 40b) du four à rouleaux, sachant que la plaque de montage (16a, 16b, 16c, 16d, 16e, 16f) présente au moins un orifice (44) pour loger un tourillon d'entraînement destiné à entraîner l'un des rouleaux (12), **caractérisé en ce qu'**est prévue au moins une unité d'engrenage d'angle (14) fixée à la plaque de montage (16a, 16b, 16c, 16d, 16e, 16f) et dont la commande par renvoi d'angle est reliée au rouleau à entraîner (12) au moyen du tourillon d'entraînement et qui présente en outre au moins un premier et un second coupleurs tournants (30) qui sont accessibles depuis l'extérieur d'un carter (48) de l'unité d'engrenage d'angle (14) et sont prévus pour relier la commande par renvoi d'angle à deux autres unités d'engrenage d'angle (14) afin d'entraîner respectivement un rouleau voisin (12), sachant que l'extrémité libre du rouleau (12) est logée par l'unité d'engrenage d'angle (14), que l'orifice (44) dans la plaque de montage (16a, 16b, 16c, 16d, 16e, 16f) présente un diamètre supérieur à celui du rouleau (12) et que l'unité d'engrenage d'angle (14) est formée de manière extractible avec le rouleau (12), et que d'un côté opposé à l'unité d'engrenage d'angle (14), le rouleau (12) est inséré avec un tourillon (42) dans un dispositif de palier (38) de manière extractible.

2. Dispositif d'entraînement selon la revendication 1, **caractérisé en ce que** le premier et le second coupleurs tournants (30) sont conçus pour compenser un décalage angulaire et/ou pour compenser un décalage linéaire parallèle à la direction de transport dans le four à rouleaux et perpendiculairement à celle-ci.

3. Dispositif d'entraînement selon la revendication 1 ou 2, **caractérisé en ce que** le premier et le second coupleurs tournants (30) sont disposés sur des côtés opposés du carter de l'unité d'engrenage d'angle (14).

4. Dispositif d'entraînement selon au moins l'une des revendications précédentes, **caractérisé en ce que** le premier coupleur tournant et le second coupleur tournant présentent un bout d'arbre (30) sortant de l'unité d'engrenage d'angle et fendu au milieu perpendiculairement à l'axe de l'arbre.

5. Dispositif d'entraînement selon la revendication 4, **caractérisé en ce que** deux coupleurs tournants d'unités d'engrenage d'angle voisines peuvent être reliés au moyen d'un coupleur en croix (32) qui présente sur des côtés opposés des parties en saillie s'adaptant aux fentes dans les coupleurs tournants (34).

6. Dispositif d'entraînement selon l'une des revendications précédentes, **caractérisé en ce que** le tourillon d'entraînement destiné à entraîner le rouleau (12) est relié à une roue dentée (52) disposée dans le carter (48) de l'unité d'engrenage d'angle (14) et qui s'engrène à une vis sans fin (54) disposée dans le carter (48) de l'unité d'engrenage d'angle (14) et dont les extrémités sont respectivement reliées au premier coupleur tournant (30) et au second coupleur tournant (30).

7. Dispositif d'entraînement selon au moins l'une des revendications précédentes, **caractérisé en ce qu'**un carter (48) de l'unité d'engrenage d'angle (14) est pour l'essentiel étanche au gaz et, dans une zone de la plaque de montage (16a, 16b, 16c, 16d, 16e, 16f) entourant l'orifice (44), est rendu étanche par rapport à celle-ci.

8. Dispositif d'entraînement selon au moins l'une des revendications précédentes, **caractérisé en ce qu'**une rampe de paliers présente une plaque de montage (16a, 16b, 16c, 16d, 16e, 16f) et entre deux et dix, en particulier six unités d'engrenage d'angle (14) reliées à la plaque de montage (16a, 16b, 16c, 16d, 16e, 16f).

9. Dispositif d'entraînement selon la revendication 8, **caractérisé en ce que** la plaque de montage (16a, 16b, 16c, 16d, 16e, 16f) est conçue pour pouvoir être ajustée relativement à la paroi latérale (40a, 40b) du four à rouleaux.

10. Dispositif d'entraînement selon au moins l'une des revendications précédentes, **caractérisé en ce que** le tourillon d'entraînement et/ou le tourillon (42) présente(nt) une extrémité libre en forme de cloche (46a, 46b) pour loger une extrémité d'un rouleau (12).

11. Four à rouleaux avec un dispositif d'entraînement pour rouleaux selon au moins l'une des revendications précédentes, **caractérisé en ce que** sur deux parois latérales opposées (40a, 40b) du four à rouleaux sont respectivement prévus deux canaux d'air de refroidissement distants l'un de l'autre et parallèles à la direction de transport dans le four à rouleaux, sachant que la plaque de montage (16a, 16b, 16c, 16d, 16e, 16f) est fixée à ceux-ci en enjambant un interstice entre deux canaux d'air de refroidissement.
